# EUROPEAN PATENT SPECIFICATION

(11) **EP 2 018 049 B1**
(45) Date of publication and mention of the grant of the patent: **01.05.2013**
(21) Application number: 08160270.8
(22) Date of filing: 11.07.2008
(51) Int. Cl.: H04N 5/232, G06T 3/40

(54) **Method of assembling a panoramic image and camera therefor**
Verfahren zur Zusammensetzung eines Panoramabildes und Kamera dafür
Procédé d'assemblage d'une image panoramique et caméra associée

(30) Priority: 18.07.2007 US 826767; 02.07.2008 KR 20080064009
(43) Date of publication of application: 21.01.2009
(73) Proprietor: Samsung Electronics Co., Ltd., Suwon-si, Gyeonggi-do, 443-742 (KR)
(72) Inventor: Linder, Natan, Gyeonggi-do (KR); Ben-Ami, Eli, Gyeonggi-do (KR); Shtainhart, Adar, Gyeonggi-do (KR); Distanik, Israel, Gyeonggi-do (KR); Lavski, Ehud, Gyeonggi-do (KR); Sorek, Noam, Gyeonggi-do (KR); Bregman-Amitai, Orna, Gyeonggi-do (KR); Armony-Shimoni, Lilach, Gyeonggi-do (KR); Shenhav, Tom, Gyeonggi-do (KR)
(74) Representative: Harrison Goddard Foote

(56) References cited:
- EP-A- 1 613 060
- WO-A-99/51027
- WO-A-2006/122189
- WO-A2-2005/084400
- US-A1- 2005 022 139
- US-A1- 2006 062 564
- US-A1- 2007 025 723
- US-A1- 2007 081 081
- US-A1- 2007 159 527
- US-B2- 6 865 028

## Description

### RELATED APPLICATION

This application is related to a co-pending application entitled "METHOD FOR CONSTRUCTING A COMPOSITE IMAGE" identified as Attorney Docket 38327 by Noam SOREK and Orna BREGMAN-AMITAI

### FIELD OF THE INVENTION

The present invention relates to production of panoramic images, for example using a camera installed in a mobile phone handset.

### BACKGROUND OF THE INVENTION

Digital cameras with panoramic photography capabilities are commercially available. Mobile telephones with built in digital cameras are also commercially available. Typically, editing and/or manipulation solutions for panoramic images are performed on a separate computing device not incorporated into the camera or phone handset.

In general, panoramic photography refers to production of photographic images with exceptionally wide fields of view. Panoramic images typically capture a field of view comparable to, or greater than, that of the human eye, about 160° by 75°. Maintenance of detail across the entire picture contributes to a perceived image quality. Panoramic indicates that the image offers an unobstructed or complete view of an area. In many cases, panoramic images are presented as a wide strip.

Production of a panoramic image often involves capturing overlapping photographic frames and matching, or "stitching" the frames together at their overlapping edges.

The following patents and applications are generally indicative of current panoramic technology in "stand alone" cameras. The list does not purport to be exhaustive.

US 5,138460 by Egawa describes an apparatus for forming composite images. Egawa's apparatus includes a display device for displaying an image to be photographed such as a portion of an object, a memory device for storing data concerning an image which has been already photographed such as a previously photographed portion of the object, and a control device for enabling the display device to substantially simultaneously display both the image to be photographed and the image already photographed and stored as data in the memory device.

US 5,907,626 to Toklu et al describes method for motion tracking and constructing a mosaic of video objects as well as a method for synthetic object transfiguration from a mosaic. According to Toklu, a 2-D triangular mesh is employed to represent a video object, which permits to describe the motion of the object by the displacements of the node points of the mesh, and to describe any intensity variations by the contrast and brightness parameters estimated for each node point. Using a temporal history of the node point locations, the nodes of the 2-D mesh are tracked even when they become invisible because of self-occlusion or occlusion by another object. By adding new nodes or updating the 2-D triangular mesh, any uncovered parts of the video object are incrementally added to the mosaic. A finite number of views representing the constructed mosaic are selected and used for synthetic transfiguration of a replacement object in place of the original one.

US 5,999,662 and 6,393,163 to Burt et al. each describe a system for automatically generating a mosaic from a plurality of input images. The system sequentially executes an image alignment process, an editing process, and a combining process such that, from a sequence of images, the system automatically produces a seamless mosaic for various applications. The mosaic based display system permits a system user to display, manipulate and alter a mosaic. The mosaic based compression system exploits the temporal and spatial redundancy in image sequences and efficiently compresses the image information. The compression system can be used for compressing image information for storage in a storage device or can be used for compressing image information for transmission through a band-limited transmission channel.

United States Patent Application 20040189849 by Hofer describes a panoramic sequence guide that can be used to guide a user in composing and capturing images to be used to create a composite panoramic image. In use, the guide tracks a viewed scene, determines the proper position of a composition guide relative to the viewed scene, and displays a composition guide on a live-view screen that provides an indication of what portion of the viewed scene is to be captured. The displayed composition guide is fixed to the viewed scene such that the guide moves with the viewed scene in the screen.

Korean patent 0286306 to Choi describes a method of panoramic photography which uses a digital still camera to easily connect pictures to construct a panoramic picture using an LCD monitor.

United States Patent Application 2004/0228544 by Takaaki et al. describes an image processing method and apparatus for generating a panoramic image in which the hue or brightness discontinuities generated at the seams of source images are reduced. Upon compositing source images having an overlap portion, the hue or brightness of each source image is converted using a reference image which has overlap portions with both the source images to be composited and the converted images are composited, thereby reducing the hue or brightness discontinuities generated at the seam of images.

US patent applications 2006/0062487, 2006/0018547, 2005/0200706, 2005/0008254 and 2004/0130626 by Ouchi et al. describe an image processing apparatus for generating graphics data representing a single seamless planar image synthesized from a multiple sets of graphics data contained in a plurality of graphics files which establishes a spheroidal or cylindrical projection plane for synthesis of the multiple sets of graphics data.

The following patents and applications are generally indicative of current panoramic technology in cameras "built in" to mobile phone handsets. The list does not purport to be exhaustive.

International application WO/2005/041564 by KONINKLIJKE PHILIPS ELECTRONICS N.V. describes a digital camera with panorama or mosaic functionality. The invention relates to an electronic device with a digital camera, and to a method of enabling to create a composite picture using a digital camera. In some embodiments, the electronic device is a mobile phone.

United States Patent Application 20060181619 to Liow et al. describes a method for forming a panoramic image using a camera. According to Liow, a blending area is formed in a first image on a display of the camera. The camera is moved before being prepared to take a second photograph. In the blending area only, a pixel matching process is performed for determining an alignment of the portion of the first image in the blending area and part of a second image of the second photograph in the blending area. In some embodiments, the method is practiced using a camera in a mobile phone.

There are commercially available panoramic picture technologies available for mobile phones. These technologies include, but are not necessarily limited to:
Scalado Autorama™ (Scalado AB; Sweden);
Vivid Panorama (Acrodea; Tokyo; Japan); and
PanoMan™ (Bit Side Technologies; Berlin; Germany).

Korean Patent 20060006186 to LG electronics describes taking a panoramic picture while transparently showing the part of the panoramic picture already taken.

Other known techniques for generating mosaic panoramic images are disclosed in EP 1613060, US 2007/0025723, US 2007/0081081, WO 99/51027, WO 2006/122189, and EP0989729.

JP2005072952 discloses that a initial image is taken, a vertical bar at the left or right border of the initial image is displayed together with the initial image and moved with the initial image as the camera moves. When the vertical bar is moved to the other side and the next image is aligned, then the image is captured.

### SUMMARY OF THE INVENTION

According to a first aspect of the invention, there is provided a method of assembling a panoramic image from a plurality of frames in a camera, as claimed in claim 1.

According to a second aspect of the invention, there is provided a camera adapted to assemble a panoramic image from a plurality of frames as claimed in claim 6.

### BRIEF DESCRIPTION OF THE DRAWINGS

Exemplary non-limiting embodiments of the invention described in the following description, read with reference to the figures attached hereto. In the figures, identical and similar structures, elements or parts thereof that appear in more than one figure are generally labeled with the same or similar references in the figures in which they appear. Dimensions of components and features shown in the figures are chosen primarily for convenience and clarity of presentation and are not necessarily to scale. The attached figures are:
Figs. 1a and 1b are schematic representations of front and back sides respectively of a mobile telephone handset adapted to provide a panoramic imaging interface according to an exemplary embodiment of the invention;
Figs. 2a; 2b; 2c and 2d are flow diagrams illustrating exemplary methods of panoramic picture acquisition and manipulation according to various exemplary embodiments of the invention;
Figs. 3a, 3b, 3c and 3d are schematic representations of a mobile phone user interface for acquisition of frames of a panoramic image according to exemplary embodiments of the invention;
Fig. 4 is a schematic representation of application of a graphic "sticker" to an image according to an exemplary embodiment of the invention;
Fig. 5 is a schematic representation of blending of an additional image from a series of stored images to an image according to an exemplary embodiment of the invention;
Fig. 6 is a schematic representation of inversion of an image according to an exemplary embodiment of the invention;
Fig. 7 is a schematic representation of a panoramic mosaic template according to an exemplary embodiment of the invention;
Fig. 8 is a schematic representation of an exemplary virtual 3D projection interface and exemplary 3D projection outputs; and
Figs. 9a; 9b; 9c and 9d represent schematically different exemplary sequences for acquisition of frames in an exemplary panoramic matrix.

### DESCRIPTION OF EXEMPLARY EMBODIMENTS

### Overview

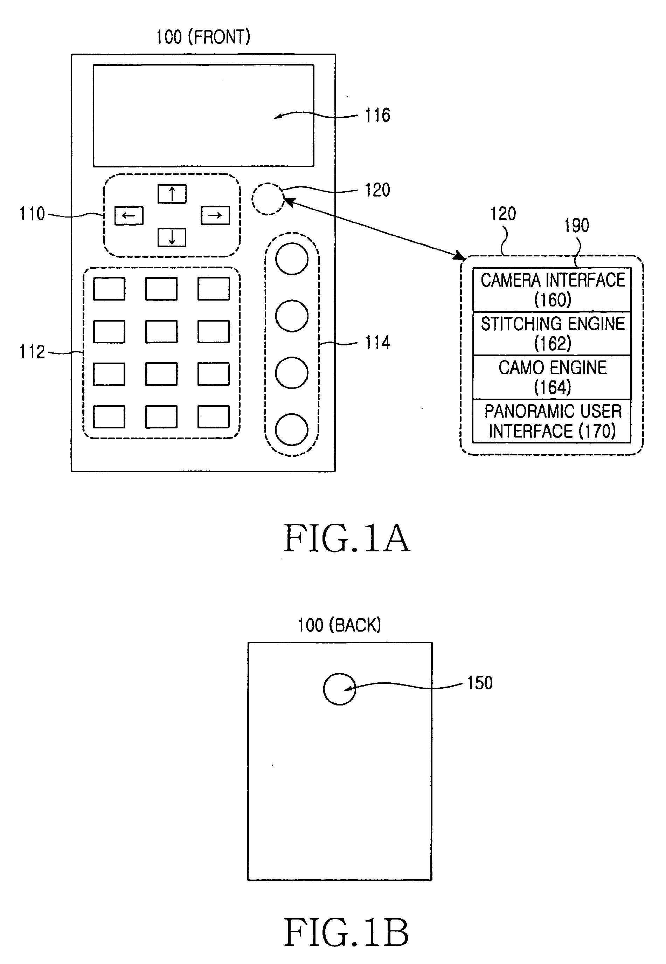

Figs. 1a and 1b are schematic representations of front and back sides respectively of a mobile telephone handset adapted to provide a panoramic imaging interface according to one or more exemplary embodiments of the invention. Exemplary handset 100 comprises a display screen 116 (Fig. 1a), a standard twelve key telephone keypad 112 and a navigation device 110. Optionally one or more auxiliary function keys 114 are included. In an exemplary embodiment of the invention, auxiliary function keys 114 are used to control camera functions. In the depicted embodiment (Fig. 1b) a lens 150 is visible on the back of handset 100.

In an exemplary embodiment of the invention, a memory device 120 stores a panoramic imaging module 190. Optionally, imaging module 190 is further subdivided into functional components. In the depicted embodiment, imaging module 190 comprises a camera interface 160, a camera motion (CaMo) engine 164, a stitching engine 162, and a panoramic user interface 170.

In an exemplary embodiment of the invention, camera interface 160 provides menus and/or instructions to a user on display 116. Optionally, camera interface 160 operates concurrently or sequentially with presentation of a view area of lens 150 on display 116.

In an exemplary embodiment of the invention, CaMo engine 164 monitors a direction and/or velocity of camera motion as the user sweeps or pans across an area comprising multiple fields of view of lens 150. Optionally, panning is horizontal, vertical or diagonal.

In an exemplary embodiment of the invention, panoramic user interface 170 aids the user in adjusting panning direction and speed of motion for panorama acquisition and/or selecting frames belonging to a panoramic image and/or in manipulation of the panoramic image after it is acquired.

In an exemplary embodiment of the invention, stitching engine 162 assembles or "stitches" the frames together to form the panoramic image. Optionally, a degree of overlap between successive frames of the image contributes to image clarity for static subjects (e.g. landscapes). Optionally, a degree of overlap between successive frames of the image detracts from image clarity for dynamic subjects (e.g. streets with moving vehicles or crowds of people).

In an exemplary embodiment of the invention, the panoramic image is of a 3D object. Optionally, different portions of the 3D object are photographed from different angles.

### Exemplary methods

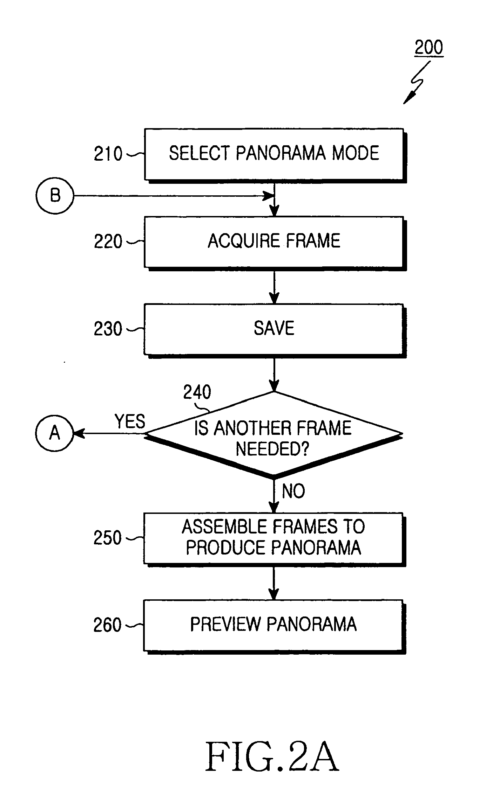

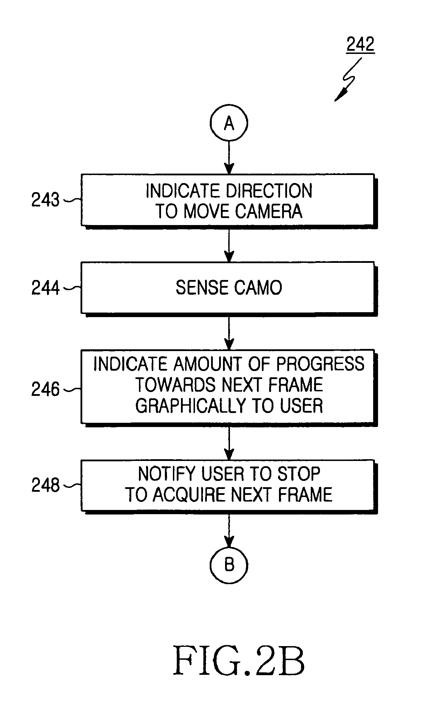

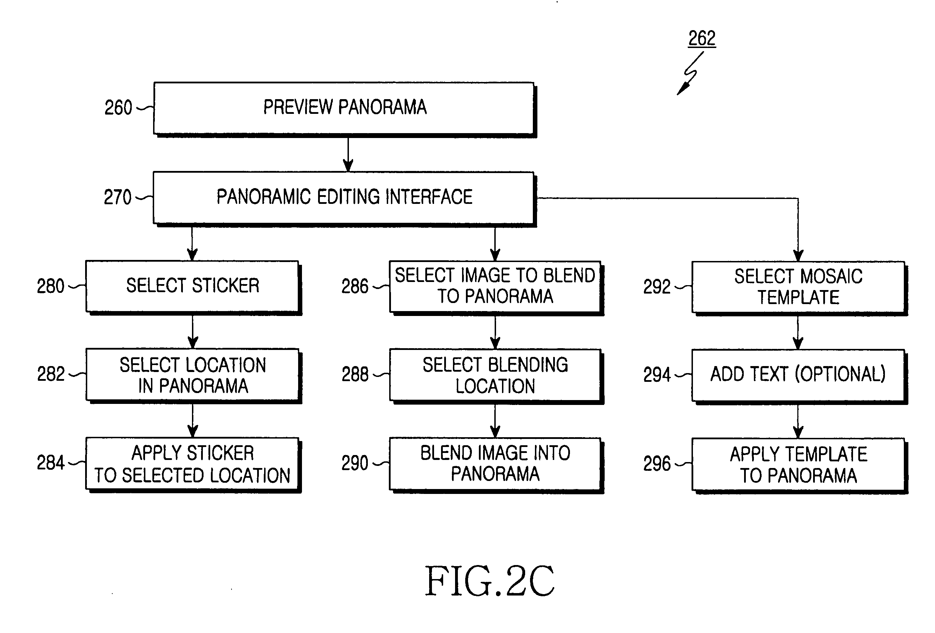

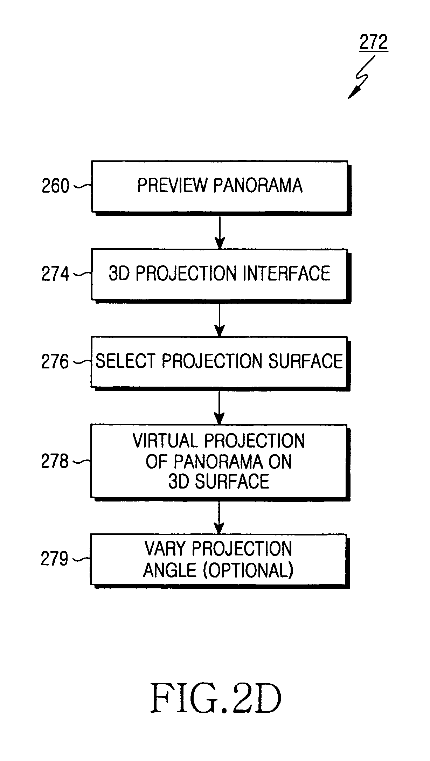

Figs. 2a; 2b; 2c and 2d are flow diagrams illustrating exemplary methods of panoramic picture acquisition and manipulation according to various exemplary embodiments of the invention.

Fig. 2a is a simplified flow diagram depicting an exemplary method 200 of acquisition of a panoramic image on a mobile phone handset (e.g. 100). At 210 a user is presented with a menu and selects photography and panorama mode within photography. At this stage lens 150 is activated and display screen 116 begins to function as a viewfinder. The user compares what is visible in viewfinder 116 to the entire scene before them and selects a frame to serve as a first frame for a panoramic series. Optionally, this first frame comprises one end of a conventional strip panorama. Alternatively, or additionally, the first frame comprises one frame of a matrix which is panoramic in two dimensions. In an exemplary embodiment of the invention, the camera is acquiring a video stream when the first frame is acquired. Optionally, the camera continues to acquire a video stream as additional frames are acquired.

At 220, the selected frame is acquired and at 230 it is saved.

At 240, the camera asks the question: "Is another frame needed?" In the event that another frame is needed, it goes to step 243 of Fig. 2b. In Figures 2a and 2b, a symbol A is used so as to show that the 240 of Figure 2a is connected with 243 of Figure 2b.

In some exemplary embodiments of the invention, the user defines a number of frames to be acquired ahead of time. According to these exemplary embodiments of the invention, the camera compares a number of frames currently saved to the defined number of frames and ascertains the answer automatically.

In some exemplary embodiments of the invention, the user defines a number of frames to be acquired during image frame acquisition. Definition of a number of frames can be accomplished, for example, by defining an overall size of the panorama, for example by sweeping or panning with the camera. According to these exemplary embodiments of the invention, the user answers the question manually. Optionally, the answer is conveyer to camera interface 160 by pressing one of auxiliary keys 114. Optionally, a default number of frames (e.g. 3, 5 or 8) is selected automatically if no user input is received. Optionally, the answer yes is assumed by default, and the user can override and answer no (meaning end of acquisition) by pressing one of auxiliary keys 114.

If the answer to the question is yes, acquisition 220 and saving 230 are repeated.

When a sufficient number of frames have been acquired, the answer to the question is no. At this stage, all stored frames are assembled 250 to produce a panoramic image. Optionally, assembly is performed by stitching engine 162.

In an exemplary embodiment of the invention, the panoramic image is presented as a preview 260 on display 116. Optionally, the preview is not subject to manipulation or editing at this stage. Optionally, the user is asked if the previewed panorama should be stored for future display and/or editing and/or manipulation and/or transmission. Optionally, panoramic images produced by exemplary embodiments of the invention can be transmitted to another device. Alternatively, or additionally, the user can select to improve the image by indicating an area to be reacquired. Optionally, the user interface guides the user to aim camera so as to reacquire the selected area.

In an exemplary embodiment of the invention, the other device comprises one or more additional mobile phone handsets and the panoramic image is included in a Multi-Media Message Service (MMS) message. Alternatively, or additionally, transfer to another mobile phone handset can be performed locally, e.g. via Bluetooth, infrared or another wireless protocol.

In an exemplary embodiment of the invention, the other device comprises one or more remote servers and the panoramic image is up-loaded to the server (e.g. using WAP).

Fig. 2b is a simplified flow diagram depicting an exemplary method 242 which aids a user in selecting frames for inclusion in the panoramic image by means of a user interface in greater detail.

At 240, the camera asks the question:"Is another frame needed?" (as in Fig. 2a).

In response to a "yes" answer which can be delivered automatically or manually as described above, the user is presented with an indication 243 in which direction to move the camera of handset 100.

At 244, CaMo is sensed. In an exemplary embodiment of the invention, sensing is performed by CaMo engine 164.

At 246, an indication of an amount of progress towards a next fame is indicated graphically to the user. In an exemplary embodiment of the invention, graphic indications are presented in display 116 over a currently visible viewing area of lens 150.

At 248, a notification to the user to stop to acquire the next frame is provided. Optionally, the next frame is acquired (220; Fig. 2a) manually or automatically as described hereinabove. In Figures 2a and 2b, a symbol B is used so as to show that 248 of Figure 2b is connected with 220 of Figure 2a.

In an exemplary embodiment of the invention, panoramic user interface 170 (Fig. 1a) comprises panoramic editing interface 270 which is described in greater detail in Fig. 2c.

Fig. 2c is a simplified flow diagram depicting exemplary methods 262 of editing and/or manipulation of an acquired panoramic image in a mobile telephone handset according to exemplary embodiments of the invention.

The flow diagram begins with preview panorama (260 of Fig. 2a) indicating that a complete panoramic image has been acquired and is available.

With a previewed panorama 260 visible on display 116 (Fig 1), the user selects a panoramic editing interface 270. Optionally, editing interface 270 offers the user more than one editing possibility. In the depicted embodiment, three main editing possibilities are offered, although the actual number of options may be greater than three or less than three according to different exemplary embodiments of the invention. Optionally, there is a trade off between number of editing possibilities offered and available hardware memory and/or computing capacity in mobile phone handset 100.

The three main editing possibilities depicted in Fig. 2c are application of a sticker to a panoramic image, blending of an image to a panorama and application of a mosaic template to a panorama. According to exemplary embodiments of the invention, the user selects one or more of these possibilities.

In an exemplary embodiment of the invention, the user applies a sticker to a panoramic image.

At 280 a user selects a sticker. The stickers are optionally provided as clip-art in any available image format including, but not limited to, jpeg, tiff and gif. Typically, there is a trade off between the number of stickers available for selection and available hardware memory in mobile phone handset 100. Optionally, availability of stickers for download from a remote server contributes to a reduction in demands on available hardware memory in mobile phone handset 100.

At 282, the user selects a location within the panoramic image. Optionally, location selection is by manipulation of a cursor on display 116 using navigation device 110. In an exemplary embodiment of the invention, automating sensing of CaMo is used for cursor manipulation. Optionally, the user moves the cursor by moving the camera.

At 284 the user applies the sticker to the selected location. Optionally, application is by operation of an auxiliary key 114 or by selection of an "apply" command from a menu. Optionally, sticker selection 280 and application 284 are integrated into a single operation. Optionally, application 284 is performed prior to location selection 282 and the selected sticker serves as a cursor.

In an exemplary embodiment of the invention, the user blends a photographic image to a panoramic image.

At 286, the user selects an image to blend into the panorama. Again, there is a trade off between the number of images available for selection and available hardware memory in mobile phone handset 100. Optionally, availability of images for blending as downloadable items from a remote server contributes to a reduction in demands on available hardware memory in mobile phone handset 100.

At 288 the user selects a location within the panoramic image. Optionally, location selection is as described above for sticker application.

At 290 the user blends the selected image to the selected location. Optionally, blending is as described above for sticker application. Optionally, blending 290 and image selection 286 are performed concurrently. Optionally, an order of the operations is changed so that selecting 288 of the blending location includes moving the image selected at 288 over the panorama. Optionally, a portion of the selected image is moved over the panoramic image as an overlay. In an exemplary embodiment of the invention, moving at least a portion of the image over the panoramic image contributes to an ability to achieve a correct alignment. Optionally, CaMo and/or a navigation device are employed to move the overlaid image with respect to the panorama. In an exemplary embodiment of the invention, analytic circuitry provides a precise alignment based upon an initial alignment provided by the user.

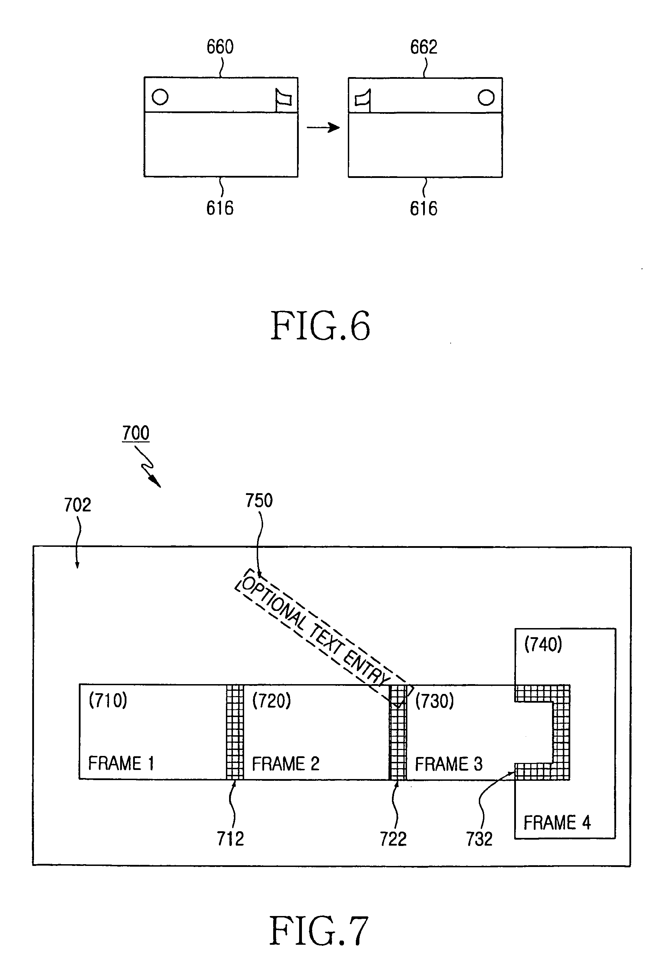

In an exemplary embodiment of the invention, the user applies a mosaic template (e.g. template 700 of Fig. 7; described hereinbelow) to a panoramic image. Optionally, application of a template to an assembled panoramic image contributes to a reduction in perceptibility of imperfections at stitching junctions and/or to a reduction in perceptibility of parametric differences between frames. Parametric differences between frames include, but are not limited to, white balance, lighting level, contrast, viewing angle and applied degree of zoom.

At 292, the user selects a mosaic template from among a group of mosaic templates. Again, there is a trade off between the number of templates available for selection and available hardware memory in mobile phone handset 100.

At 294, the user optionally adds text to the template. At 296, the user applies the selected template to the panoramic image to create the mosaic.

Fig. 2d is a simplified flow diagram depicting a method 272 for virtual projection of a panoramic image on a 3D surface.

In an exemplary embodiment of the invention, method 272 begins after acquisition of a panoramic image and preview 260 (Fig. 2a) of the panorama on display 116 (Fig. 1). In other exemplary embodiments of the invention, method 272 begins whenever the user wishes to view a recorded panorama.

At 274 the user selects a 3D projection interface 274. Optionally, projection interface 274 is provided as a part of panoramic user interface 170.

At 276, the user optionally selects a projection surface. Exemplary projection surfaces include, but are not limited to, a concave surface, a convex surface and a sphere. In an exemplary embodiment of the invention, selection of a surface indicates to panoramic user interface 170 which projection algorithm to apply. 3D projection algorithms are known to those of ordinary skill in the art. Algorithms suitable for use in the context of the present invention can be found, for example, in "Image Alignment and Stitching: A Tutorial" by Richard Szeliski (Preliminary draft, September 27, 2004, Technical Report, MSR-TR-2004-92. pages 8-10 ;which is fully incorporated herein by reference) and/or in US patent applications 2006/0062487, 2006/0018547, 2005/0200706, 2005/0008254 and 2004/0130626 by Ouchi et al. which are ach fully incorporated herein by reference. Additional algorithms suitable for use in the context of the present invention are disclosed in a related application entitled "METHOD FOR CONSTRUCTING A COMPOSITE IMAGE" by Noam SOREK and Orna BREGMAN AMITAI identified as attorney docket 38327 filed the same date as the instant application and fully incorporated herein by reference.

At 278, virtual projection of the panorama on the 3D surface is performed and the result is displayed on display 116 and/or stored in a memory. Optionally, a stored virtual projection can be transmitted to another device (e.g. another mobile phone handset) and/or viewed in the future. Optionally, virtual projection 278 occurs automatically after selection 276 of the projection surface. In an exemplary embodiment of the invention, only one projection surface is available and selection of 3D projection interface 274 leads directly to virtual projection 278.

Optionally, (279) the user can vary the projection angle and zoom with respect to the selected surface. Optionally, this variation can be performed before or during virtual projection 278. In an exemplary embodiment of the invention, the user moves the camera and the CaMo engine interprets the motion and alters the apparent projection angle accordingly. Mobile phone handsets 100 with greater memory and/or computing capacity will typically be able to more rapidly adjust virtual projection 278 in response to variations in projection angle 279 specified by the user.

### Exemplary next frame alignment interface

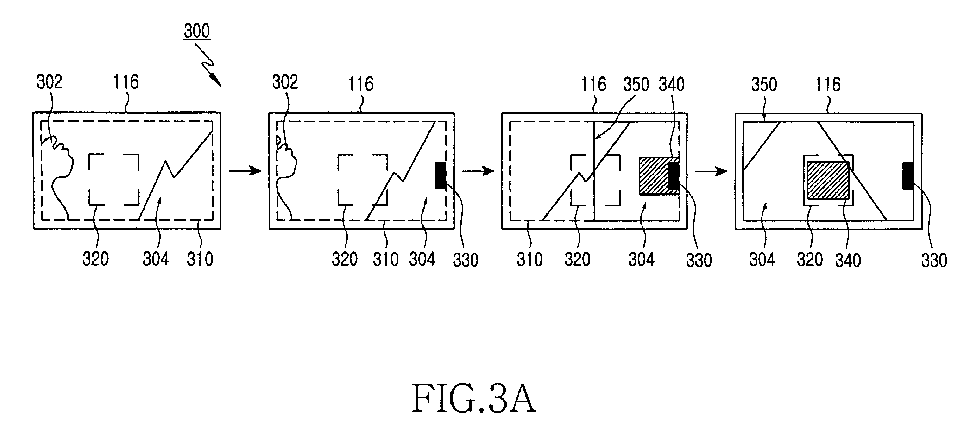

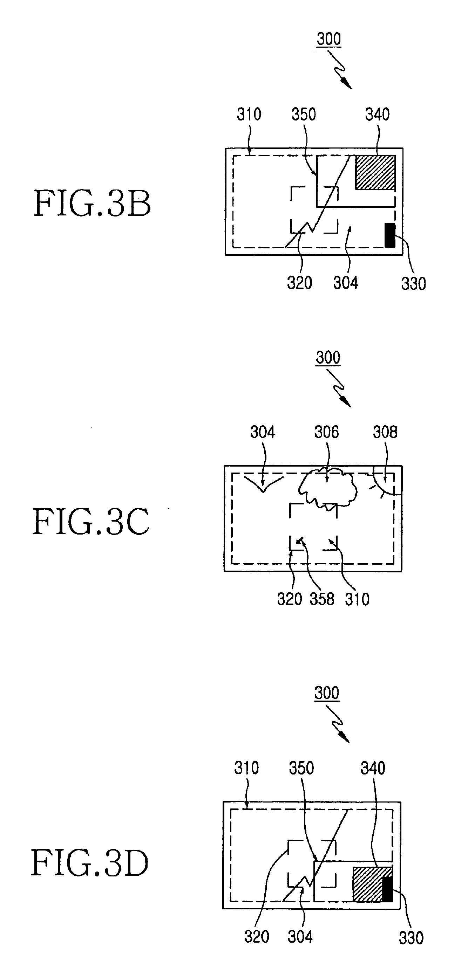

Figs 3a, 3b, 3c and 3d are schematic representations of a mobile phone user interface for acquisition of frames of a panoramic image according to exemplary embodiments of the invention. These figures illustrate one or more exemplary modes of practice of method 242 (Fig. 2b).

Fig. 3a depicts a series of scenes (from left to right) visible in a viewing frame 310 on a display screen 116 of mobile phone handset (100 of Fig. 1a) as the user acquires a first image frame of a panoramic image and moves the camera to the right in order to line up a next frame of the panoramic image. The series of scenes illustrate optional features of an exemplary user interface 300 according to an exemplary embodiment of the invention.

In the left most panel, the user selects a first frame including two objects (tree 302 and mountain 304). A center target 320 is substantially empty in this view. The user initiates panoramic acquisition, for example by pressing a shutter button (e.g. one of auxiliary keys 114). In an exemplary embodiment of the invention, the user then selects a panoramic orientation by beginning to move the camera. In the depicted example, camera motion (CaMo) is to the right.

Automatic sensing of CaMo is well known to those of ordinary skill in the art and is described, for example, in co-pending United States patent applications 20070041058 entitled "A Device and A Method For Identifying Movement Patterns" filed on August 14, 2006 by Eli BEN-AMI and Israel DISATNIK and 20070041616 entitled "A Displacement and Tilt Detection Method For A Portable Autonomous Device Having An Integrated Image Sensor and A Device Therefor" filed on August 14, 2006 by Jonggoo LEE, Eli BEN-AMI, Israel DISATNIK and Natan LINDER. The disclosures of these applications are each incorporated herein by reference.

In an exemplary embodiment of the invention, combining "feature detection" capabilities with the CaMo engine can affect a desired degree of overlap. For example, if faces are detected, the overlap area may be enlarged to ensure that a complete face will be taken from one picture and will not be part of the stitching area. Optionally, it is advantageous to make this determination prior to looking for a next frame. According to different exemplary embodiment of the invention, this capability can be optional (i.e. subject to user selection) or integrated. A level of importance of this feature optionally varies with a degree of acquaintance of the photographer to subjects of the photograph. Optionally, the user indicates whether a particular face should, or should not, be allowed to include a stitch line. In another example, if faces are detected, the camera can suggest taking pictures so that faces are overlapped.

In the second panel from the left, CaMo engine 164 has sensed the camera motion and provided a direction indicator 330. Optionally, direction indicator 330 blinks. Although direction indicator 330 is depicted as a rectangle, it can be provided as any desired shape. Optionally, direction indicator 330 is provided as an arrow. Optionally, direction indicator 330 can occupy an entire edge of viewing frame 310. In an exemplary embodiment of the invention, direction indicator 330 helps the user to move the camera properly. Optionally, direction indicator 330 can also indicate speed of CaMo. For example, if speed of CaMo is too high, indicator 330 may turn yellow, then orange and eventually red. If speed of CaMo is within an acceptable range, indicator 330 may turn green. Other feedback means including, but not limited to, color and/or graphic and/or iconic feedback and/or audio feedback (e.g. speech and/or sounds) can be employed in this context.

As the camera pans to the right, tree 302 disappears out of the left side of viewing frame 310 and mountain 304 occupies progressively more of frame 310.

The third panel from the left depicts two additional exemplary features of user interface 300.

In an exemplary embodiment of the invention, a "next frame border" 350 is provided on display 116. Optionally, next frame border 350 can aid the user in vertical and/or horizontal alignment of the next frame with a previous frame of the panoramic image under construction. As the user pans to the right, next frame border 350 covers progressively more of viewing frame 310. If the user moves the camera up or down, next frame border 350 becomes vertically misaligned with viewing frame 310 and the user intuitively understands what correction to CaMo is desirable to achieve proper alignment.

Alternatively, or additionally, a "next frame center indicator" 340 is provided. Next frame center indicator 340 is to be aligned with center target 320 for acquisition of the next frame. As with next frame border 350, the user intuitively adjusts CaMo to align center indicator 340 with center target 320.

The right most panel depicts correct alignment of the next frame with viewing frame 310. At this stage next frame border 350 is fully aligned with viewing frame 310 and/or next frame center indicator 340 is fully aligned with center target 320. In an exemplary embodiment of the invention, CaMo is briefly interrupted at this to permit capture of the next image frame. Optionally, capture of the next image frame can be automatic or manual. In an exemplary embodiment of the invention, capture of the next image frame is automatic and user interface 300 provides a signal to the user to cease CaMo. According to exemplary embodiments of the invention, the signal can include one or more of a change in appearance of next frame border 350, a change in appearance of next frame center indicator 340, a change in appearance of direction indicator 330 and, an audible signal (e.g. tone, bell or synthetic voice prompt). Change of appearance as used here can indicate one or more of a change in color, texture, degree of transparency and blinking rate.

In some exemplary embodiments of interface 300, both next frame border 350 and next frame center indicator 340 are provided. In other exemplary embodiments of the invention, only one of next frame border 350 and next frame center indicator 340 is provided.

Optionally, alignment of the next frame is presented to the user as a game. In an exemplary embodiment of the invention, center target 320 and center indicator 340 are graphically modified to conform to a theme. Optionally the theme is a sports theme. For example, center target 320 can be presented as a goal and center indicator 340 can be presented as a football. Optionally, a time used to place the ball in the goal is presented to the user.

In an exemplary embodiment of the invention, center target 320 and/or center indicator 340 are sized to occupy only a small portion of viewing frame 310. Optionally, a small size of center target 320 and/or center indicator 340 contributes to an ability of the user to align these objects. Optionally, center target 320 and center indicator 340 are a same (e.g. two rectangles of different sizes) or different shapes (e.g. a circle sized to be inscribed in a square). In an exemplary embodiment of the invention, center indicator 340 is configured as a cross and center target 320 is a geometric shape (e.g. circle or square) in which the cross is to be inscribed. Optionally, inscription of a cross in a geometric shape is intuitively understood by the user.

In an exemplary embodiment of the invention, the target is provided in a location other than a center of viewing frame 310. Optionally, a position of the target is adjusted relative to a desired degree of overlap of consecutive frames.

Fig. 3D illustrates exemplary ways of indicating to the user that CaMo is inappropriate for aligning the next frame. In the depicted exemplary frame, mountain 304 is still in view, but the user has shifted the camera upwards. The type and degree of misalignment are optionally presented to the user in one or more of at least three exemplary ways.

In a first optional information presentation mode, motion direction indicator 330 moves from its nominal position in the center of the right edge of viewing frame 310 to a lower right corner of viewing frame 310. This indicates to the user that the camera should be shifted down while motion to the right continues.

In a second optional information presentation mode, next frame center indicator 340 appears below center target 320 and the user understands intuitively that the camera should be lowered to bring 340 and 320 into vertical alignment with one another.

In a third optional information presentation mode, next frame border 350 appears below viewing frame 310 and the user understands intuitively that the camera should be lowered to bring 350 and 310 into vertical alignment with one another.

In another optional information presentation mode (depicted in Fig. 3b), next frame center indicator 340 appears above center target 320 and the user understands intuitively that the camera should be lowered to bring 340 and 320 into vertical alignment with one another.

In another optional information presentation mode (also depicted in Fig. 3b), next frame border 350 appears above viewing frame 310 and the user understands intuitively that the camera should be lowered to bring 350 and 310 into vertical alignment with one another.

In an exemplary embodiment of the invention, two, optionally three of these information presentation modes are used in conjunction with one another as depicted in Fig. 3d, although any one of the three can be sufficient to cause the user to implement a proper corrective motion of the camera.

Fig. 3c illustrates an exemplary way of indicating to the user that CaMo is inappropriate for aligning the next frame. In the depicted exemplary frame a gross misalignment has occurred so that mountain 304 is no longer visible because the user has moved the camera too far up. The user sees irrelevant objects (e.g., bird 304, cloud 306 and sun 308) in viewing frame 310 but has no intuitive understanding of a spatial relationship between these objects and a desired next frame for the panoramic image under construction. In the depicted embodiment, CaMo engine 164 aids the user by providing an arrow 358 indicative of a direction to move the camera so that next frame border 350 and/or next frame center indicator 340 can be displayed in at least a portion of viewing frame 310. In other embodiments, CaMo engine 164 aids the user by providing an arrow 358 indicative of a direction to move the image so that next frame border 350 and/or next frame center indicator 340 can be displayed in at least a portion of viewing frame 310.

Arrow 358 is depicted in aiming target 320 but can optionally be presented anywhere in viewing frame 310. Optionally, a size of arrow 358 indicates an amount of motion to be undertaken for the desired correction. In an exemplary embodiment of the invention, as the user moves the camera in a correct direction, arrow 358 shrinks until it eventually disappears and is replaced by one or more of next frame border 350, next frame center indicator 340 and motion direction indicator 330. Optionally, a situation similar to that depicted in Fig 3b provides a transition between the gross misalignment of Fig. 3c and proper alignment of Fig. 3a.

In an exemplary embodiment of the invention, arrow 358 can point in one of four directions (up, down, left and right). According to this embodiment of the invention, interface 300 performs a diagonal correction in two separate steps (e.g. down and left).

In an exemplary embodiment of the invention, arrow 358 can point in one of eight directions (up, down, left, right and four diagonal directions). According to this embodiment of the invention, interface 300 performs corrections in a single step.

### Exemplary collage production

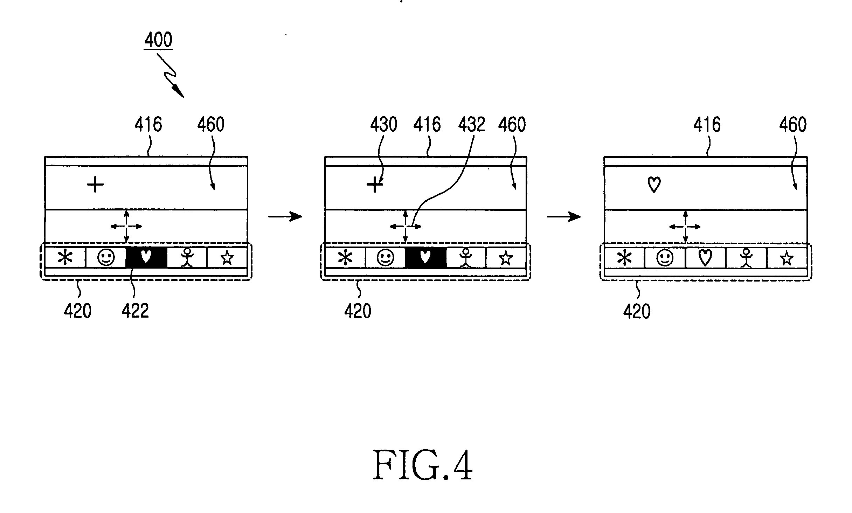

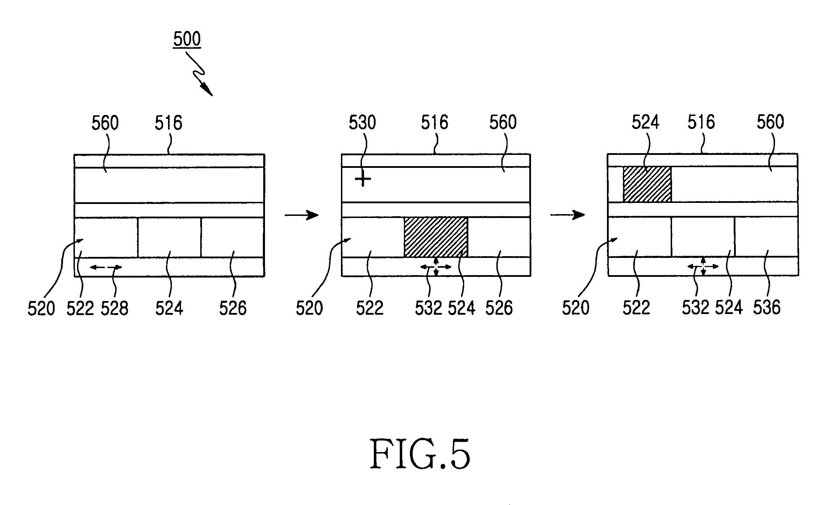

According to some exemplary embodiments of the invention, a panoramic image is incorporated into a collage on a mobile phone handset. Optionally, the collage can include clip art and/or photographic images (or portions thereof) in addition to the panoramic image. Figs. 4 and 5 depict exemplary user interfaces 400 and 500 respectively for collage production.

Fig. 4 is a schematic representation of exemplary user interface 400 for application of a graphic clip-art "sticker" to an image according to an exemplary embodiment of the invention.

According to depicted exemplary interface 400, display 416 concurrently presents panoramic image 460, and a library 420 of clip art stickers. In an exemplary embodiment of the invention, the user selects a clip art item (e.g. heart 422) using navigation device 110. Referring now to the second panel of Fig. 4, the user positions a cursor 430 at a desired location in image 460 using navigation device 110. Optionally, a current direction of motion of cursor 430 is indicated by direction indicator 432. In an exemplary embodiment of the invention, the user issues an "apply sticker command" when cursor 430 is positioned at a desired location in image 460. As depicted in the right hand panel, the selected clip-art (e.g. heart 422) is applied to image 460 as a sticker in response to the command. Optionally, the command is issued using one of auxiliary keys 114.

Fig. 5 is a schematic representation of exemplary user interface 500 for blending of an additional photographic image from a series of stored images to a panoramic image according to an exemplary embodiment of the invention.

According to depicted exemplary interface 500, display 516 concurrently presents panoramic image 560, and a library 520 of photographic images (e.g. 522, 524 and 526). In an exemplary embodiment of the invention, the user selects a photographic image (e.g. 524) using navigation device 110. Optionally, a selection direction within library 520 is indicated by direction indicator 528. Referring now to the second panel of Fig. 5, the user positions a cursor 530 at a desired location in image 560 using navigation device 110. In an exemplary embodiment of the invention, automating sensing of CaMo is used for cursor manipulation.

Optionally, a current direction of motion of cursor 530 is indicated by direction indicator 532. In an exemplary embodiment of the invention, the user issues a "blend photo" command when cursor 530 is positioned at a desired location in image 560. As depicted in the right hand panel, selected photograph 524 is blended to image 560 in response to the command. Optionally, the command is issued using one of auxiliary keys 114. According to exemplary embodiments of the invention, applied image 524 can be opaque or partially transparent. Optionally, applied image 524 is opaque at its center and becomes progressively more transparent towards its edges. In an exemplary embodiment of the invention, the progression towards transparency contributes to a blending effect of applied image 524 with background image 560.

### Exemplary overlay alignment

In an exemplary embodiment of the invention, a user interface provides an overlaid portion of a second image for alignment with a portion of a first image. In some embodiments, overlay alignment contributes to a smooth transition between frames of a panoramic image by helping the user achieve a good initial alignment. In an exemplary embodiment of the invention, a first image is presented in a viewing frame. Optionally, the first image is a current "viewfinder" image which has not yet been acquired. Typically, the viewfinder image resides in a temporary storage buffer, sometimes at a lower resolution than "acquired" frames stored in memory. A second image (e.g. a last acquired frame in a panoramic image) can then be overlaid in a portion of the viewing frame. Optionally, the overlaid image is blended with the current viewfinder image. In an exemplary embodiment of the invention, blending of the overlaid image with the current viewfinder image produces a new "second image" which can be overlaid on a portion of a viewfinder image as panning continues. In this way, the user can piece together the panorama during frame acquisition.

Optionally, the user selects a portion of the second image to be overlaid. In an exemplary embodiment of the invention, 30-60% overlay aids the user in seeking a correct alignment. Optionally, an increase in overlay percentage contributes to ease of user managed alignment. In an exemplary embodiment of the invention, the user manipulates the first image with respect to the second overlaid image by moving the camera until a desired alignment is achieved. Optionally, the user or the camera determines when desired alignment is achieved, for example by pixel matching. Optionally, a first image comprising a viewfinder image is automatically acquired when the desired alignment is achieved. In an exemplary embodiment of the invention, stitching engine 162 adjusts the desired alignment of two images in memory automatically. In many exemplary embodiments of the invention, automatic alignment by stitching engine 162 supplements and/or completes a preliminary alignment performed by the user.

In some exemplary embodiments of the invention, a portion of the viewfinder displays a previously acquired portion of a panoramic image and the user employs overlay alignment to indicate a desired spatial relationship between the new frame and the existing portion panoramic image.

In some exemplary embodiments of the invention, the user constructs a panoramic image using overlay alignment of frames that were not originally acquired in a panoramic mode, or belong to separate panoramas.

### Exemplary image inversion

Fig. 6 is a schematic representation of a user interface 600 for inversion of an image according to an exemplary embodiment of the invention. In the depicted embodiment a panoramic image 660 is presented on a display screen 616. In an exemplary embodiment of the invention, the user selects "invert" from a menu and a mirror image panorama 662 is presented on display 616. While horizontal inversion is depicted, vertical inversion is also within the scope of the invention. Optionally, inversion can be performed to allow incorporation of additional frames acquired from a different angle.

### Exemplary panoramic template

In an exemplary embodiment of the invention, a panoramic image is presented in a template on a display of a mobile telephone handset.

Fig. 7 is a schematic representation of a template 700 according to an exemplary embodiment of the invention. In the depicted template 700, a background area 702 contains placeholders 710, 720 and 730 for frames 1, 2 and 3 of a panoramic image respectively. Optionally, the user places previously acquired frames into placeholders 710, 720 and 730 without stitching the frames together in a standard panorama. Optionally, an additional frame in a different orientation from the panorama is placed in an additional placeholder 740.

In an exemplary embodiment of the invention, frame separators 712, 722 and 732 are provided between the placeholders to create a mosaic effect. In an exemplary embodiment of the invention, the frame separators serve to at least partially mask an imperfect alignment between adjacent frames.

In an exemplary embodiment of the invention, template 700 includes at least one text box 750 for optional text entry. Optionally, the user can format text using fonts and/or styles (e.g. italics, underline or bold) and/or effects (e.g. shadows, 3D or animation effects).

In an exemplary embodiment of the invention, the user can select a color and/or texture and/or fill effect (e.g. gradient, recessed and/or superimposed) and/or theme for background area 702. Optionally, separators 712, 722 and 732 are treated as part of the background area in terms of color and/or texture and/or fill effect.

Optionally, background 702 and/or separators 712, 722 and 732 are recessed with respect to the panoramic image so that the image casts a shadow on the background and/or separators.

Optionally, background 702 and/or separators 712, 722 and 732 are superimposed with respect to the panoramic image so that the background and/or separators cast a shadow on the image.

In an exemplary embodiment of the invention, a user assembles a series of frames which do not form a panorama into placeholders 710, 720 and 730 (and optionally 740). Optionally, the frames are thematically related (e.g. all pictures from a single location) but are not perceptibly spatially aligned as frames in a conventional panoramic image are. For Example, a visitor at an Alpine chalet might assemble frames comprising a view of a valley from the front porch, a view of a façade of the chalet and a self portrait with the valley in the background into placeholders 710, 720 and 730 to create a theme-o-rama of a visit.

### Exemplary virtual 3D projection

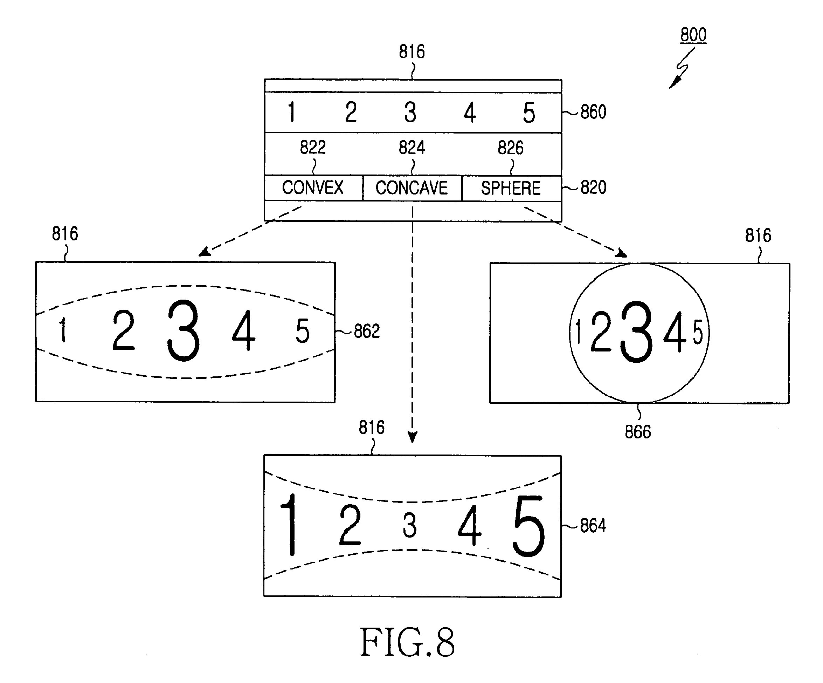

Fig. 8 is a schematic representation of an exemplary user interface 800 for virtual 3D projection interface with exemplary 3D projection outputs of panoramic images depicted below.

The upper portion of Fig. 8 shows a panoramic image 860 on a display screen 816 of mobile handset 100. In order to emphasize the effect of projection on different types of 3D surfaces, image 860 includes the numeral 1 through 5 in a uniform size arranged from left to right. Optionally, menu 820 presents a list of 3D projection surfaces. In the depicted exemplary embodiment menu 820 contains three choices: convex (822), concave (824) and sphere (826). Selection of a 3D surface from menu 820 can be via navigation device 110 as described above.

The three 3D surfaces depicted are exemplary only and projection on any surface (e.g. face) or solid (e.g. cube) is possible. Optionally, a library of 3D surfaces for projection of panoramic images thereupon is available on a remote server and users can download different surfaces to their handsets for projection.

The lower portion of Fig. 8 shows exemplary 3D projection outputs resulting from selection of convex (822), concave (824) and sphere (826) respectively.

Selection of convex projection surface 822 from menu 820 produces modified panoramic image 862. In image 862, a central portion (represented by the numeral 3) is modified relative to a corresponding area of source image 860 using a relevant 3D projection formula. End portions of modified image 862 (represented by the numerals 1 and 5) are modified relative to a corresponding area of source image 860 according to the same projection algorithm. Intervening portions of image 862 (represented by numerals 2 and 4) are less modified relative to corresponding areas of source image 860. Optionally, the original panoramic image (before projection) and/or the projected image can be stored in memory of the handset and/or transmitted to another device (e.g. an additional mobile phone handset).

Selection of concave projection surface 824 from menu 820 produces modified panoramic image 864. In image 864, a central portion (represented by the numeral 3) is modified relative to a corresponding area of source image 860 using a relevant 3D projection algorithm. End portions of modified image 864 (represented by the numerals 1 and 5) are modified relative to a corresponding area of source image 860 in a different way according to the same algorithm. Intervening portions of image 864 (represented by numerals 2 and 4) are modified to a lesser degree relative to corresponding areas of source image 860.

Selection of spherical projection surface 826 from menu 820 produces modified panoramic image 866. In image 866, a central portion (represented by the numeral 3) is modified relative to a corresponding area of source image 860 to a greater degree than in modified image 862 using a relevant 3D projection formula. End portions of modified image 866 (represented by the numerals 1 and 5) are modified relative to a corresponding area of source image 860 to a greater degree than in modified image 862. In addition, modified image 866 is subject to widthwise compression with the greater compression occurring at the ends (represented by numerals 1 and 5).

In an exemplary embodiment of the invention, 3D projection contributes to a more realistic appearance of a panoramic image. Optionally, the user can change the projection angle (e.g. by moving the camera) to simulate turning their head in an actual scene. In an exemplary embodiment of the invention, only a portion of the panoramic image is presented on the display screen and the viewer can change the presented portion by changing the selected projection angle. Optionally, changing the presented portion by changing the selected projection angle simulates a real-world feeling. Optionally, a degree of curvature and/or regularity of curvature are adjustable by the user. Optionally, the user can zoom in and out of the projected image.

### Exemplary panoramic matrices

In examples set forth hereinabove, the term "panoramic image" has indicated a linear series of frames assembled end-to-end (or comer-to-comer) to produce a panorama. In an exemplary embodiment of the invention, an image which is panoramic in two orthogonal dimensions is produced by acquiring a series of frames arranged in a matrix. An exemplary 3X3 matrix is presented here although larger matrices and/or matrices which are larger in one orthogonal direction than in a second orthogonal direction are within the scope of the invention. The number of image frames in a matrix is typically influenced by interplay between image resolution, available memory, available computing capacity and sensitivity of CaMo engine 164 or accelerometer. Alignment of a next frame with a preceding frame is optionally according to user interfaces described hereinabove.

Although frames are depicted as squares in the examples set forth hereinbelow, each frame can have any H: W aspect ratio. In an exemplary embodiment of the invention, CaMo engine 164 is programmed to consider an aspect ratio of each frame. Optionally, aspect ratio and/or panning direction are considered by CaMo engine 164 when deciding when to acquire a next frame.

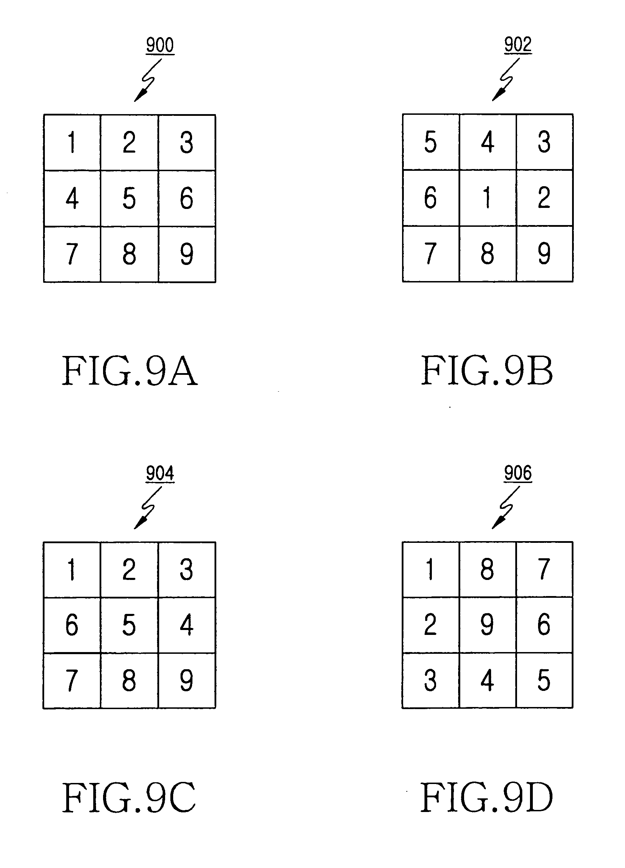

Figs. 9a; 9b; 9c and 9d represent schematically different exemplary sequences for acquisition of frames in an exemplary 3X3 panoramic matrix.

Fig. 9a depicts an exemplary acquisition sequence 900 in which the user begins at the corner (top left in this example) of a desired image area. After acquiring frame 1, the user pans in a first direction (right in this example) to acquire frame 2 and continues to pan to acquire frame 3. After acquisition of frame 3, the user pans back (left in this example) until frame 1 is visible again, and then pans down to capture frame 4. The user then pans in the first direction again (right in this example) to capture frames 5 and 6. After acquisition of frame 6, the user pans back (left in this example) until frame 4 is visible again, and then pans down to capture frame 7. The user then pans right to capture frames 8 and 9 and the matrix is complete. Leftward panning from frame 3 back to frame 1 and from frame 6 back to frame 4 can be perceived as a disadvantage by the user.

Fig. 9b depicts an exemplary acquisition sequence 902 in which the user begins at the center of a desired image area. After acquiring frame 1, the user pans in a first direction (right in this example) and acquires frame 2. The user then pans in a direction perpendicular to the first direction (up in this example) and acquire frame 3. The user then pans in a direction opposite to the first direction (left in this example) and acquires frames 4 and 5. The user then pans in a direction opposite to the second direction (down in this example) and acquires frames 6 and 7. The user then resumes panning in the first direction and acquires frames 8 and 9. This exemplary acquisition sequence eliminates panning back through previously acquired frames although it includes 4 changes in panning direction.

Fig. 9c depicts an exemplary acquisition sequence 904 in which the user begins at the corner (top left in this example) of a desired image area. After acquiring frame 1, the user pans in a first direction (right in this example) to acquire frame 2 and continues to pan to acquire frame 3. After acquisition of frame 3, the user pans in a perpendicular direction (down in this example) to acquire frame 4 and then pans back (left in this example) to acquire frames 5 and 6. After acquisition of frame 6, the user pans in the perpendicular direction to acquire frame 7 and resumes panning in the first direction to acquire frames 8 and 9.

Fig. 9d depicts an exemplary acquisition sequence 900 in which the user begins at the corner (top left in this example) of a desired image area and acquires a last frame in the center of the image area. After acquiring frame 1, the user pans in a first direction (down in this example) to acquire frame 2 and continues to pan to acquire frame 3. After acquisition of frame 3, the user pans in a perpendicular direction (right in this example) to acquire frames 4 and 5 and then pans in an opposite direction (up in this example) to acquire frames 6 and 7. After acquisition of frame 7, the user pans back towards frame 1 (left in this example) to acquire frame 8 and resumes panning in the first direction to acquire frame 9.

In some exemplary embodiments of the invention, only a portion of a matrix is of interest. Referring again to Fig 9c, optionally a user begins by acquiring frame 3, and then acquires frames 4,5,7,8 and 9 to produce an image that approximates a triangle and is panoramic in two orthogonal directions. Alternatively (referring to Fig. 9d) a user begins by acquiring frame 1, then acquires frames 2, 3, 4 and 5 to produce an "L" shaped image that is panoramic in two orthogonal directions.

### Exemplary flat projection of 3D objects

In an exemplary embodiment of the invention, a flat panoramic image of a 3D surface is provided. For example, two or three or four sides of a building can be depicted as frames in a single flat panoramic image.

### General

In an exemplary embodiment of the invention, hardware sensors (e.g. accelerometers) at least partially replace the functionality of CaMo engine 164.

In an exemplary embodiment of the invention, user perceptible "front end features" operate together with one or more "back end" features. Optionally, back end features are at least partially imperceptible, optionally substantially completely imperceptible to the user. In an exemplary embodiment of the invention, the user perceives improved image quality resulting from back end features. Optionally, operation of back-end features does not significantly adversely affect camera and/or handset function.

One exemplary back end feature employed in some embodiments of the invention comprises use of cumulative camera motion between two or more frames of a panoramic image as a guide for stitching. Optionally, cumulative camera motion provides an initial alignment for stitching and a stitching algorithm makes fine adjustments in alignment based upon analysis of pixels in proximity to the stitch line suggested by accumulated CaMo.

Another exemplary back end feature employed in some embodiments of the invention comprises automated image capture by the camera when the CaMo engine feels that a suitable next frame for a panoramic image is in view. Optionally, an initial capture of a next frame is at a low resolution and/or includes some defect (e.g. motion, or blur). In an exemplary embodiment of the invention, if the user keeps the same next frame in view, the camera automatically acquires one or more additional images. Optionally, when a panoramic image is being assembled, a "best image" for each frame is selected for inclusion in the panorama. According to various exemplary embodiments of the invention, selection of a best image is made based on one or more parametric measures of image quality. Parametric measures of image quality include, but are not limited to measures of sharpness, dynamic range, contrast, and white balance. Optionally, if bad parts are near edges, a degree of overlap can be changed to improve the assembled panoramic image.

Another exemplary back end feature employed in some embodiments of the invention comprises applying pre storage processing to frames of a panoramic image. In an exemplary embodiment of the invention, acquired frames are processed for one or more of projection simulation (e.g., cylindrical), intensity, color correction, and registration calculations prior to storage in memory. Optionally, processing is applied that makes the frames more similar to one another so that the assembled panorama will have a uniform appearance across a panoramic range. Optionally, preprocessing contributes to an increase in efficiency. In an exemplary embodiment of the invention, efficiency increases as preservation of data which might normally be lost during the "save to memory" process increases.

A variety of numerical indicators have been utilized in the above description. It should be understood that these numerical indicators could vary even further based upon a variety of engineering principles, materials, intended use and designs incorporated into the invention. Alternatively, or additionally, as available computing capacity and/or memory in mobile phone handsets become greater, numerical constraints described hereinabove may be loosened. Additionally, components and/or actions ascribed to exemplary embodiments of the invention and depicted as a single unit may be divided into subunits. Conversely, components and/or actions ascribed to exemplary embodiments of the invention and depicted as sub-units may be combined into a single unit with the described/depicted function.

Alternatively, or additionally, features used to describe a method can be used to characterize an apparatus and features used to describe an apparatus can be used to characterize a method.

Alternatively, or additionally, various methods described hereinabove can optionally be provided as software or firmware or integrated into mobile phone handset hardware.

It should be further understood that the individual features described hereinabove can be combined in all possible combinations and sub-combinations to produce exemplary embodiments of the invention. The examples given above are purely illustrative and are not intended to limit the scope of the invention which is defined solely by the following claims.

The terms "include", "comprise" and "have" and their conjugates as used herein mean "including but not necessarily limited to".

The terms "select", "selection", "choose" and "indicate" and their conjugates as used herein refer to selection from a menu containing icons and/or text as is commonly practiced in computerized interfaces.

## Claims

1. A method of assembling a panoramic image from a plurality of frames in a camera, the method comprising:
(a) acquiring a video stream using a camera;
(b) selecting (220) an initial frame from the video stream for capture as a still image;
(c) further selecting at least one additional frame (242); and
(d) stitching (250) the at least one additional frame to the initial frame in the camera to create a panoramic image;
wherein the further selecting includes:
providing a next frame border on a display wherein the next frame border indicates horizontal and vertical edges of the at least are additional frame;
moving the next frame border in horizontal and vertical directions as the camera is panned in horizontal and vertical directions, respectively, thereby indicating a degree of alignment in the horizontal and vertical directions, respectively, of the at least one additional frame; and
selecting the at least one additional frame from the video stream for capture as an additional still image when the horizontal and vertical edges of the at least one additional frame is aligned with the next frame border.

2. A method according to claim 1, wherein the further selecting further includes overlay alignment, whereby a portion of the initial frame is overlaid in a user interface for alignment with the additional frame.

3. A method according to claim 1 or 2, wherein the further selecting includes detection of camera motion, CaMo (244).

4. A method according to any preceding claim, further comprising providing feedback on CaMo (246).

5. A method according to any preceding claim, wherein the at least one frame is acquired from a different position.

6. A camera adapted to assemble a panoramic image from a plurality of frames, the camera comprising:
(a) a video acquisition module capable of providing a video stream;
(b) a selector module adapted to select an initial frame from the video stream for capture as a still image;
(c) a user interface (170) adapted to guide a user in selecting an additional frame; and
(d) a stitching module (162) adapted to stitch the additional frame to the initial frame to create a panoramic image;
wherein the user interface (170) provides a next frame border on a display (116) wherein the next frame border indicates horizontal and vertical edges of the at least one additional frame and moves the next frame border in horizontal and vertical directions as the camera is panned in horizontal and vertical directions, respectively, thereby indicating a degree of alignment in the horizontal and vertical directions, respectively, of the additional frame, whereby the additional frame is selected from the video stream for capture as an additional still image when the horizontal and vertical edges of the additional frame is aligned with the next frame border.

## Patentansprüche

1. Verfahren zum Zusammensetzen eines Panoramabildes aus mehreren Einzelbildern in einer Kamera, wobei das Verfahren Folgendes beinhaltet:
(a) Erfassen eines Videostroms mit einer Kamera;
(b) Auswählen (220) eines ersten Einzelbildes aus dem Videostrom zur Aufnahme als Festbild;
(c) ferner Auswählen wenigstens eines zusätzlichen Einzelbildes (242); und
(d) Anheften (250) des wenigstens einen zusätzlichen Einzelbildes an das erste Einzelbild in der Kamera zum Erzeugen eines Panoramabildes;
wobei das weitere Auswählen Folgendes beinhaltet:
Erzeugen einer nächsten Einzelbildumrandung auf einem Display, wobei die nächste Einzelbildumrandung horizontale und vertikale Ränder des wenigstens einen zusätzlichen Einzelbildes anzeigt;
Bewegen der nächsten Einzelbildumrandung in horizontaler und vertikaler Richtung, während die Kamera in horizontaler bzw. vertikaler Richtung geschwenkt wird, um dadurch einen Grad an Ausrichtung in der horizontalen bzw. vertikalen Richtung des wenigstens einen zusätzlichen Einzelbildes anzuzeigen; und
Auswählen des wenigstens einen zusätzlichen Einzelbildes aus dem Videostrom zur Aufnahme als zusätzliches Festbild, wenn die horizontalen und vertikalen Ränder des wenigstens einen zusätzlichen Einzelbildes auf die nächste Einzelbildumrandung ausgerichtet sind.

2. Verfahren nach Anspruch 1, wobei das weitere Auswählen ferner eine Übereinanderlageausrichtung beinhaltet, so dass ein Teil des ersten Einzelbildes in einer Benutzeroberfläche zur Ausrichtung auf das zusätzliche Einzelbild aufgelegt ist.

3. Verfahren nach Anspruch 1 oder 2, wobei das weitere Auswählen die Detektion von Kamerabewegung CaMo (244) beinhaltet.

4. Verfahren nach einem der vorherigen Ansprüche, das ferner das Bereitstellen von Feedback über CaMo (246) beinhaltet.

5. Verfahren nach einem der vorherigen Ansprüche, wobei das wenigstens eine Einzelbild aus einer anderen Position aufgenommen wird.

6. Kamera zum Zusammensetzen eines Panoramabildes aus mehreren Einzelbildern, wobei die Kamera Folgendes umfasst:
(a) ein Videoerfassungsmodul zum Erzeugen eines Videostroms;
(b) ein Selektormodul zum Auswählen eines ersten Einzelbildes aus dem Videostrom zur Aufnahme als Festbild;
(c) eine Benutzeroberfläche (170) zum Führen eines Benutzers beim Wählen eines zusätzlichen Einzelbildes; und
(d) ein Anheftungsmodul (162) zum Anheften des zusätzlichen Einzelbildes an das erste Einzelbild zum Erzeugen eines Panoramabildes;
wobei die Benutzeroberfläche (170) eine nächste Einzelbildumrandung auf einem Display (116) bereitstellt, wobei die nächste Einzelbildumrandung horizontale und vertikale Ränder des wenigstens einen zusätzlichen Einzelbildes anzeigt und die nächste Einzelbildumrandung in horizontaler und vertikaler Richtung bewegt, während die Kamera in horizontaler bzw. vertikaler Richtung geschwenkt wird, um dadurch einen Grad an Ausrichtung in horizontaler bzw. vertikaler Richtung des zusätzlichen Einzelbildes anzuzeigen, so dass das zusätzliche Einzelbild aus dem Videostrom zur Aufnahme als zusätzliches Festbild ausgewählt wird, wenn die horizontalen und vertikalen Ränder des zusätzlichen Einzelbildes mit der nächsten Einzelbildumrandung ausgerichtet sind.

## Revendications

1. Procédé d'assemblage d'une image panoramique à partir d'une pluralité de trames dans une caméra, le procédé comprenant les opérations consistant à :
(a) effectuer l'acquisition d'un flux vidéo en utilisant une caméra ;
(b) sélectionner (220) une trame initiale à partir du flux vidéo à des fins de saisie en tant qu'image fixe ;
(c) sélectionner en outre au moins une trame additionnelle (242) ; et
(d) joindre (250) ladite au moins une trame additionnelle à la trame initiale dans la caméra afin de créer une image panoramique ;
cas dans lequel la sélection supplémentaire comporte les opérations consistant à :
mettre à disposition un prochain cadre de trame sur un afficheur, le prochain cadre de trame indiquant des bords horizontaux et verticaux de ladite au moins une trame additionnelle ;
déplacer le prochain cadre de trame suivant des sens horizontaux et verticaux au fur et à mesure que la caméra effectue un panoramique suivant des sens horizontaux et verticaux, respectivement, ce qui permet ainsi d'indiquer un degré d'alignement suivant les sens horizontaux et verticaux, respectivement, de ladite au moins une trame additionnelle ; et
sélectionner ladite au moins une trame additionnelle à partir du flux vidéo pour en faire la saisie en tant qu'image fixe additionnelle lorsque les bords horizontaux et verticaux de ladite au moins une trame additionnelle sont alignés avec le prochain cadre de trame.

2. Procédé selon la revendication 1, la sélection supplémentaire comportant en outre un alignement en superposition, en vertu duquel une portion de la trame initiale fait l'objet d'une superposition dans une interface Utilisateur en vue d'un alignement avec la trame additionnelle.

3. Procédé selon la revendication 1 ou 2, la sélection supplémentaire comportant la détection du mouvement de caméra, CaMo (244).

4. Procédé selon l'une quelconque des revendications précédentes, comprenant en outre la fourniture d'une rétroaction sur CaMo (246).

5. Procédé selon l'une quelconque des revendications précédentes, ladite au moins une trame étant acquise à partir d'une position différente.

6. Caméra conçue pour assembler une image panoramique à partir d'une pluralité de trames, la caméra comprenant :
(a) un module d'acquisition de vidéo capable de fournir un flux vidéo ;
(b) un module sélecteur conçu pour sélectionner une trame initiale à partir du flux vidéo à des fins de saisie en tant qu'image fixe ;
(c) une interface Utilisateur (170) conçue pour guider un utilisateur lors de la sélection d'une trame additionnelle ; et
(d) un module de jonction (162) conçu pour joindre la trame additionnelle à la trame initiale afin de créer une image panoramique ;
cas dans lequel l'interface Utilisateur (170) offre un prochain cadre de trame sur un afficheur (116), le prochain cadre de trame indiquant des bords horizontaux et verticaux de ladite au moins une trame additionnelle, et déplace le prochain cadre de trame suivant des sens horizontaux et verticaux au fur et à mesure que la caméra effectue un panoramique suivant des sens horizontaux et verticaux, respectivement, ce qui permet ainsi d'indiquer un degré d'alignement suivant les sens horizontaux et verticaux, respectivement, de la trame additionnelle, en vertu de quoi la trame additionnelle est sélectionnée à partir du flux vidéo pour en faire la saisie en tant qu'image fixe additionnelle lorsque les bords horizontaux et verticaux de la trame additionnelle sont alignés avec le prochain cadre de trame.
